# EUROPEAN PATENT APPLICATION

(11) **EP 3 782 960 A1**
(43) Date of publication of application: **24.02.2021**
(21) Application number: 20191011.4
(22) Date of filing: 13.08.2020
(51) Int. Cl.: C03B 37/012

(54) **METHOD FOR MANUFACTURING OF OPTICAL FIBRE PREFORM**

(30) Priority: 13.08.2019 IN 201921032801
(71) Applicant: Sterlite Technologies Ltd, Maharashtra 431 136 (IN)
(72) Inventor: GAIKWAD, Sandeep, 431136 Aurangabad (IN); GOMATAM, Badri, 431136 Aurangabad (IN); KAPOOR, Saurabh, 431136 Aurangabad (IN)
(74) Representative: Hepworth Browne

(57) **Abstract**

The present disclosure provides a method for manufacturing of an optical fiber preform (108). The method includes a first step of compacting silica particles (102) using a pressing die (114) and punching machine (112). The silica particles (102) are loaded into a cavity of the pressing die (114) surrounding a cylindrical rod (116). The silica particles (102) are compacted to form compact object with a predefined shape. The method includes another step of sintering the compacted object with the cylindrical rod (116) to form the optical fiber preform (108). The sintering of the compact object is performed in a gaseous environment. The method facilitates the manufacturing of the optical fiber preform (108) that is cone free for the reduction of material loss during manufacturing of the optical fiber preform (108).

## Description

### BACKGROUND OF THE INVENTION

### Field of the Invention.

The present disclosure relates to the field of fiber optics. More particularly, the present disclosure relates to a method for manufacturing of an optical fiber preform using hot press techniques.

### Description of the related art.

Conventional chemical vapor deposition (CVD) processes, such as outside vapor deposition (OVD) and vapor axial deposition (VAD) processes are used for making optical fiber preforms. The basic process involved in the OVD process is called "flame hydrolysis" for the deposition of silica particles. In the process of flame hydrolysis, SiCl₄ reacts with oxygen to produce silica (SiO₂) and HCl. The OVD process leads to a huge loss of silica particles during deposition process to become an optical fiber preform. In addition, the OVD process is a limiting process with complex machine designs for manufacturing of the optical fiber preforms in bulk. Further, optimizing production scale becomes challenging with the OVD process.

In light of the above stated discussion, there is a need for an improved method for manufacturing of an optical fiber preform.

### SUMMARY OF THE INVENTION

The present disclosure talks about a method for manufacturing of an optical fiber preform. The method includes a first step of compacting silica particles using a pressing die and a punching machine. In addition, the method includes another step of sintering the compacted object with a rod to form the optical fiber preform. The silica particles are loaded into a cavity of the pressing die surrounding the rod. The silica particles are compacted to form a compact body with a predefined shape. The sintering of the compacted object is performed in a controlled atmosphere.

The present disclosure talks about a method for manufacturing of an optical fiber preform. The method includes a first step of compacting silica particles using a pressing die and a punching machine. In addition, the method includes another step of sintering the compacted object with a cylindrical rod to form the optical fiber preform. The silica particles are loaded into a cavity of the pressing die surrounding the cylindrical rod. The silica particles are compacted to form a compact body with a predefined shape. The sintering of the compacted object is performed in a controlled atmosphere. The method facilitates in the manufacturing of the optical fiber preform that is cone free.

In an embodiment of the present disclosure, the compaction of the silica particles corresponds to pressing of the silica particles.

In an embodiment of the present disclosure, the optical fiber preform that is cone free corresponds to the optical fiber preform having a flat surface at the top and bottom side. In an another embodiment of the present disclosure, the optical fiber preform may be with small curvature surface at the top and bottom side.

In an embodiment of the present disclosure, the controlled atmosphere includes one or more gases. The one or more gases include chlorine, fluorine, helium, argon, dinitrogen (N₂). In an embodiment of the present disclosure, the one or more gases are present independently. In another embodiment of the present disclosure, the one or more gases are in suitable combination with each other. In addition, the sintering of the compacted silica particles are performed under the controlled atmosphere to make the optical fiber preform free from bubbles.

In an embodiment of the present disclosure, the predefined shape of the optical fiber preform is achieved based on the structure or construction of the pressing die and the punching machine. The structure or construction of the pressing die and the punching machine define geometry to the optical fiber preform.

In an embodiment of the present disclosure, the silica particles are compacted in a mold assembly. The mold assembly includes the pressing die and the punching machine. The material of the mold assembly includes but not limited to one of steel, haste alloy, Carbon, Silicon Carbide, Aluminium, Foil, Teflon, HDPE, and Rubber.

In an embodiment of the present disclosure, the optical fiber preform is one of hollow cylindrical shape perform and solid cylindrical shape preform.

In an embodiment of the present disclosure, the optical fiber preform has a diameter in a range of about 50 millimeters to 300 millimeters. The optical fiber preform has a length in a range of about 50 millimeters to 2000 millimeters. The optical fiber preform has a density in a range of about 0.3 gram per cubic centimeter to 2.2 gram per cubic centimeter.

In an embodiment of the present disclosure, the cylindrical rod is one of a mold rod and a core rod. In addition, the core rod is a germania doped silica glass used for the manufacturing of the optical fiber preform.

A primary object of the present disclosure is to provide a method for manufacturing of an optical fiber preform using hot pressing.

Another object of the present disclosure is to provide a method for manufacturing of the optical fiber preform using cold pressing.

Yet another object of the present disclosure is to provide a method for the manufacturing of the optical fiber preform that may be a cone free or has a minimal curvature at the top and bottom side.

Yet another object of the present disclosure is to provide a method for the reduction of process time in the manufacturing of the optical fiber preform.

Yet another object of the present disclosure is to provide a method for the manufacturing of the optical fiber preform using binder less hot pressing.

### BRIEF DESCRIPTION OF DRAWING

Having thus described the invention in general terms, reference will now be made to the accompanying drawings, which are not necessarily drawn to scale, and wherein:
FIG. 1 illustrates a block diagram depicting a method for manufacturing of an optical fiber preform, in accordance with various embodiments of the present disclosure;

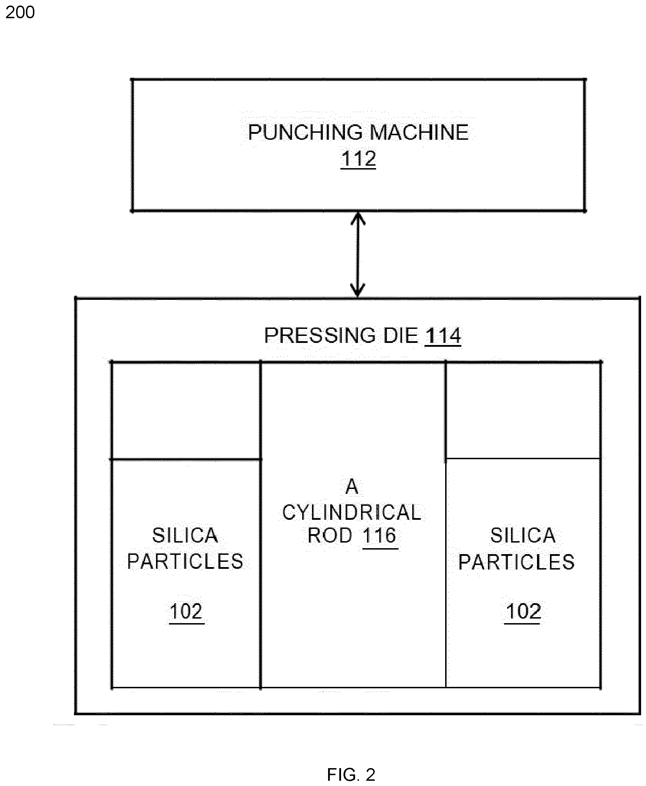

FIG. 2 illustrates a mold assembly for manufacturing of compact body from the silica particles, in accordance with various embodiments of the present disclosure; and
FIG. 3 illustrates a graph for variation of temperature with respect to time and pressing force during the process of sintering, in accordance with various embodiments of the present disclosure.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced items.

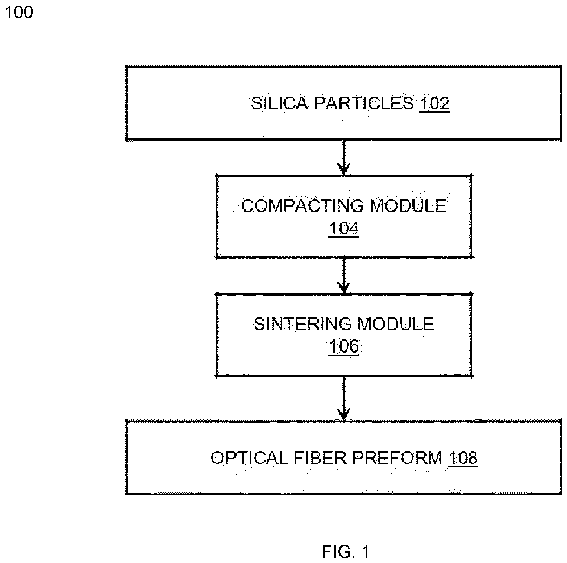

FIG. 1 illustrates a system 100 for manufacturing of an optical fiber preform 108, in accordance with various embodiments of the present disclosure. In addition, the system 100 performs one or more methods for the manufacturing of the optical fiber preform 108 with low cost, and minimum wastage of silica particles. The system 100 includes silica particles 102, a compacting module 104, and a sintering module 106.

The system 100 includes the -silica partials 102. In an embodiment of the present disclosure, the silica particles 102 are manufactured using one or more preform manufacturing processes. In an embodiment of the present disclosure, the one or more preform manufacturing processes include but may not be limited to flame hydrolysis process, tubular flow reactor process and plasma flame process. In an example, the flame hydrolysis process used to obtain silica particles of a particular morphology and sizes. In an embodiment of the present disclosure, the silica particles 102 are manufactured through a chemical reaction between one or more gases and a precursor material in a preform manufacturing unit. In an embodiment of the present disclosure, the one or more gases include but may not be limited to Hydrogen (H₂), oxygen (O₂) and liquefied natural gas. In an embodiment of the present disclosure, the precursor material used for the manufacturing of the silica particles 102 includes but may not be limited to silicon tetrachloride (SiCl₄) or Octamethylcyclotetrasiloxane (OMCTS). Further, the chemical reaction between the one or more gases and the precursor material is done in the presence of a burner assembly. The burner assembly is used to increase the temperature for enabling the chemical reaction between the one or more gases and the precursor material. Furthermore, the silica -particles obtained through the plurality of process are dehydrated first for the removal of OH content for the manufacturing of the silica particles 102. In an embodiment of the present disclosure, the heat and chlorine treatment is given to the silica particles to dehydrate and OH removal from the silica particles. In an embodiment of the present disclosure, the collection of silica particles from gas stream is done using one of cyclonic separator, electrostatic precipitators (ESP), bag filter and the like.

The system includes the compacting module 104. The compacting module 104 compact the silica particles 102 for the manufacturing of the optical fiber preform 108 using mold assembly 200. The mold assembly 200 performs pressing or compacting of the silica particles for the manufacturing of the compact object. In general, the compact object refers to a solid body forms after the compaction or pressing of the silica - particles. In addition, the pressing includes but may not be limited to cold pressing and hot pressing. The hot pressing corresponds to heating of the pressing die by radiation or convection to reach a particular range of temperature. The hot pressing allows compaction of the silica particles without the need for binders. The cold pressing corresponds to the pressing of the silica particles at room temperature. The cold pressing involves pressing of the silica particles in the presence of binders. The binders may be selected from but not limited to Poly propylene carbonate, Polyvinyl alcohol, Poly Styrene, Camphor, and Gelatin based Agar. The concentration of the binders lies in the range of about 100 ppm to 10,000 ppm. In an example of the present disclosure the concentration of the binders may be of any other suitable range.

The mold assembly 200 includes a punching machine 112, a pressing die 114 and a cylindrical rod 116. The mold assembly 200 enables the compaction or pressing of the silica particles 102 for manufacturing of the compact body.

The mold assembly 200 includes the pressing die 114. In general, die is a specialized tool used in manufacturing industries to cut or shape material mostly using a press. In addition, the dies are customized according to the shape and size of the target products. In an embodiment of the present disclosure, the cross-section of the pressing die 114 is one of circular, elliptical, cylindrical and the like. The pressing die 114 is a die used for the manufacturing of the compact object of cylindrical shape. In an embodiment of the present disclosure, the pressing die 114 has a cylindrical shape cavity at a central position of the upper surface of the pressing die 114 for the positioning of the cylindrical rod 116. In an embodiment of the present disclosure, the cylindrical rod 116 may be a metal rod or glass rod. In an embodiment of the present disclosure, the pressing die 114 has cavity around the cylindrical rod 116. The shape and size of the cavity around the cylindrical rod is defined according to the shape and size of the optical fiber preform 108. In an embodiment of the present disclosure, the pressing die 114 has first wall and the second wall. The first wall is the inner wall of the pressing die 114. The silica particles 102 is loaded in between the cylindrical rod 116 and the inner wall of the pressing die 114.

The silica particles 102 are filled or loaded inside the cavity of the pressing die 114. In an embodiment of the present disclosure, the loading of the silica particles 102 are either done manually or automatically. In an embodiment of the present disclosure, the cavity of the pressing die is cylindrical in shape. The silica particles 102 are filled or loaded inside the cavity of the pressing die 114 based on the required size of the optical fiber preform 108. In addition, the amount of the silica particles to be loaded inside the cavity is based on the dimension of the cavity of the pressing die 114. Further, the amount of the silica particles to be loaded inside the cavity is selected based on the required size of the clad portion of the optical fiber preform 108. The silica particles 102 are loaded inside the cavity of the pressing die 114 in a uniform manner.

The silica particles 102 present inside the cavity of the pressing die 114 is pressed using the punching machine 112. The punching machine 112 is a machine tool for punching or pressing of the silica particles 102 to convert the silica particles 102 into the compact object. In an embodiment of the present disclosure, the punching machine is one of the automatic machine and manual machine. In another embodiment of the present disclosure, the punching machine works on one or more mechanisms. The one or more mechanisms include hydraulic press, pneumatic mechanism and the like. The silica particles 102 are axially compressed or pressed to form the compact object around the cylindrical rod 116. The punching machine 112 is used to apply pressure on the silica particles 102 to form the compact body. The pressure is applied on the pressing die 114 to press the silica particles 102. In addition, the pressure is applied to press the silica particles 102 to form the compact object of target density. In other words, the silica particles 102 around the cylindrical rod 116 are pressed to achieve a target preform density for the formation of the compact body. In an embodiment of the present disclosure, the compaction of the silica particles 102 results in decrease in volume and increase in density of the compact object. In an embodiment of the present disclosure, inward pressure is applied on the silica particles 102 to form the compact object. In another embodiment of the present disclosure, the inward pressure is applied from the two ends of the punching machine for the conversion of the silica particles into the compact object. In an example, the two ends correspond to the left end and the right end of the punching machine. In an embodiment of the present disclosure, the punching machine 112 uniformly presses the silica particles 102 from one or more sides of the pressing die 112.

In an embodiment of the present disclosure, the cylindrical rod 116 is a mold rod used for the manufacturing of the hollow compact body. In another embodiment of the present disclosure, the cylindrical rod 116 is a core rod used for the manufacturing of the optical fiber preform 108. In an embodiment of the present disclosure, the cylindrical rod 116 is germania doped silica glass. In an embodiment of the present disclosure, the length of the cylindrical rod 116 is defined according to the required length of the optical fiber preform 108. The cylindrical rod 116 is positioned in the central cavity of the pressing die 114 by inserting the one end of the cylindrical rod 116 in central cavity of the pressing die 114.

The mold assembly 200 is made of a material selected from a group. The group includes Steel, Haste alloy, Carbon, Silicon Carbide, Rubber, Aluminum, Foil, Teflon, HDPE and the like. In an embodiment of the present disclosure, the material of the mold assembly 200 corresponds to the material of the pressing die 114 and the punching machine 112. In an embodiment of the present disclosure, the material selected from the group provides stability to the pressing die 114 and the punching machine 112. In an embodiment of the present disclosure, the material selected for the mold assembly 200 provides excellent resistance to oxidation, and is inert with respect to silica particles. In an embodiment of the present disclosure, the material selected for the mold assembly 200 has excellent mechanical strength.

The mold assembly 200 enables the conversion of the silica particles 102 into the cylindrical shape compact object. In addition, the pressing die 114 with the punching machine 112 enable the conversion of the silica particles 102 into the compact object with defined or target density.

The system 100 includes the sintering module 106 for the sintering of the compact object. The sintering of the compact object facilitates conversion of the compact body into the optical fiber preform. In general, the sintering refers to a process of forming a glass preform or optical fiber preform from the compacted object with facilitation of heat without melting compacted object to point of liquefaction. In an embodiment of the present disclosure, the cylindrical rod 116 is removed from the mold assembly 200 for the formation of the hollow cylindrical shaped compact object. In an embodiment of the present disclosure, the cylindrical rod 116 is the core rod used for the formation of the optical fiber preform 108 with core and clad region. The core rod is a germania doped silica glass.

In an embodiment of the present disclosure, the compact object is sintered at different temperatures to form the optical fiber preform 108 of different transparency. The compact object is sintered at a specified temperature to obtain the optical fiber preform 108 of desired transparency. The compact object may be sintered at a different specified temperature to obtain the optical fiber preform 108 of different transparency. Each sintering temperature of the compact object corresponds to particular transparency of the optical fiber preform 108. In an embodiment of the present disclosure, the compact object is sintered at any suitable temperature.

The system 100 performs a method for the manufacturing of the optical fiber preform 108 using hot pressing. The method includes a first step of manufacturing the compact object from the pressing or compaction of the silica particles 102. The silica particles 102 are compacted using the punching machine 112 and the pressing die 114. In an embodiment of the present disclosure, the hot pressing is performed for the manufacturing of the compacted object. The pressing die is heated by radiation or convection to reach the desired temperature for the compaction of the silica particles 102. Either uniaxial or isostatic pressing is done for the compaction of the silica particles 102 in the heated pressing die 114 for the manufacturing of the compact object. In an embodiment of the present disclosure, the pressing die 114 is heated using induction or resistance techniques. The method includes another step of sintering the compacted object for obtaining the optical fiber preform 108 of desired shape. In an embodiment of the present disclosure, the cylindrical rod 116 is removed from the mold assembly 200 to form the hollow optical fiber preform 108.

In an embodiment of the present disclosure, the shape of the optical fiber preform 108 is cylindrical. In another embodiment of the present disclosure, the shape of the optical fiber preform 108 may vary. In an embodiment of the present disclosure, the method for the manufacturing of the optical fiber preform 108 facilitates 100% pore removal from the optical fiber preform 108.

In an embodiment of the present disclosure, the hot pressing of the silica particles 102 and the sintering of the compacted object formed after the hot pressing is performed in a single furnace. In an embodiment of the present disclosure, the hot pressing and sintering are done in a sintering furnace. In another embodiment of the present disclosure, the hot pressing and sintering can be done in any suitable machinery.

In an embodiment of the present disclosure, the hollow optical fiber preform 108 manufactured by the method can be used for further processing with insertion of a germania doped core rod to make an optical fiber preform without cone. The optical fiber preform that is cone free is cylindrical in shape and has circular cross-sections. In addition, the optical fiber preform that is cone free corresponds to the optical fiber preform having a flat top and a bottom surface. In an another embodiment of the present disclosure, the optical fiber preform may be with small curvature surface at the top and bottom side. The optical fiber preform that is cone free prevents material loss from the ends. In an embodiment of the present disclosure, the material loss corresponds to the loss of the silica particles during manufacturing of the optical fiber preform.

The system 100 performs a method for the manufacturing of the optical fiber preform 108 using cold pressing. The method includes a first step of manufacturing the compact object from the pressing or compaction of the silica particles 102. The silica particles 102 are compacted using the punching machine 112 and the pressing die 114. In an embodiment of the present disclosure, cold pressing is performed for the manufacturing of the compacted object. In an embodiment of the present disclosure, the cold press is done to provide proper shape and density to the optical fiber preform 108 manufactured from the compacted object. In general, the cold pressing corresponds to the pressing of the silica particles 102 in the mold assembly 200 below the sintering temperature or at room temperature. In an example, the pressing of the silica particles 102 is done at room temperature or slightly higher than the room temperature to form the compact object of proper shape and density.

In an embodiment of the present disclosure, uniaxial pressing is done for the compaction of the silica particles 102 in the pressing die 114 for the manufacturing of the compact object. In another embodiment of the present disclosure, isostatic pressing is done for the compaction of the silica particles 102 in the pressing die 114 for the manufacturing of the compact object. The method includes another step of sintering the compacted object for obtaining the optical fiber preform 108 of the desired shape In an embodiment of the present disclosure, the sintering is performed in a controlled atmosphere. The controlled atmosphere includes gases such as chlorine, helium, argon, nitrogen and the like. The chlorine in the controlled atmosphere acts as a drying gas for the removal of OH content. The sintering of the compacted object is performed in the gaseous environment to make the optical fiber preform 108 free from bubbles. The sintering of the compacted object in the gaseous environment removes OH content from the optical fiber preform 108. In an embodiment of the present disclosure, the optical fiber preform 108 is a hollow cylindrical shaped preform formed after the removal of the cylindrical rod 116.

The system 100 performs a method for the manufacturing of the optical fiber preform 108. The method includes a first step of manufacturing the compact object from the pressing or compaction of the silica particles 102. The silica particles 102 around the cylindrical rod 116 are compacted using the punching machine 112 and the pressing die 114. The cylindrical rod 116 is a germania doped silica glass. In an embodiment of the present disclosure, the pressing die 114 and the punching machine 112 of the mold assembly 200 is made from one of the materials selected from a group of steel, haste alloy, Carbon, Silicon Carbide, Aluminium, Foil, Teflon, HDPE, and Rubber. In an embodiment of the present disclosure, hot pressing is performed for the manufacturing of the compacted object from the silica particles 102. The pressing die is heated by radiation or convection to reach the desired temperature for the compaction of the silica particles 102. Either uniaxial or isostatic pressing is done for the compaction of the silica particles 102 in the hot pressing die for the manufacturing of the compact object. In general, the uniaxial pressing involves the compaction of the silica particles 102 into the pressing die 114 by applying pressure in a single axial direction through the punching machine 112. In general, the isostatic pressing corresponds to the pressing of the silica particles in all directions to achieve maximum uniformity of density and microstructure.

In an embodiment of the present disclosure, the pressing die 114 is heated using induction or resistance techniques. The method includes another step of performing sintering of the hollow cylindrical compacted object with the core rod for obtaining the optical fiber preform 108. The sintering of the compacted object with the core rod is done in a gaseous environment of chlorine, Helium, Argon, Nitrogen and the like. In an embodiment of the present disclosure, the optical fiber preform 108 manufactured using hot press has a diameter in a range of about 50 millimeter to 300 millimeter. Further, the optical fiber preform 108 has a length in a range of about 50 millimeter to 2000 millimeter. The optical fiber preform 108 has a density in a range of about 0.3 gram per cubic centimetre to 2.2 gram per cubic centimetre. In an embodiment of the present disclosure, the optical fiber preform 108 may have any suitable value corresponding to diameter, length, and density. In an embodiment of the present disclosure, the optical fiber preform is completely free of air pores after vacuum suction.

In an embodiment of the present disclosure, the silica particles 102 are pressed or compacted using hot pressing. In addition, the hot pressing is done without binders.

In an embodiment of the present disclosure, the silica particles 102 are pressed or compacted using cold pressing. In addition, the cold pressing requires silicate binders for the conversion of the silica particles 102 into the compact object. In an embodiment of the present disclosure, the binders may be selected from but not limited to Poly propylene carbonate, Polyvinyl alcohol, Poly Styrene, Camphor, and Gelatin based Agar. In an embodiment of the present disclosure, the concentration of binders lies in a range of about 100 ppm to 10,000 ppm. In general, the binders may be used to give high strength for handling of the cold pressured part before sintering. In an example of the present disclosure the concentration of the binders may be of any other suitable range.

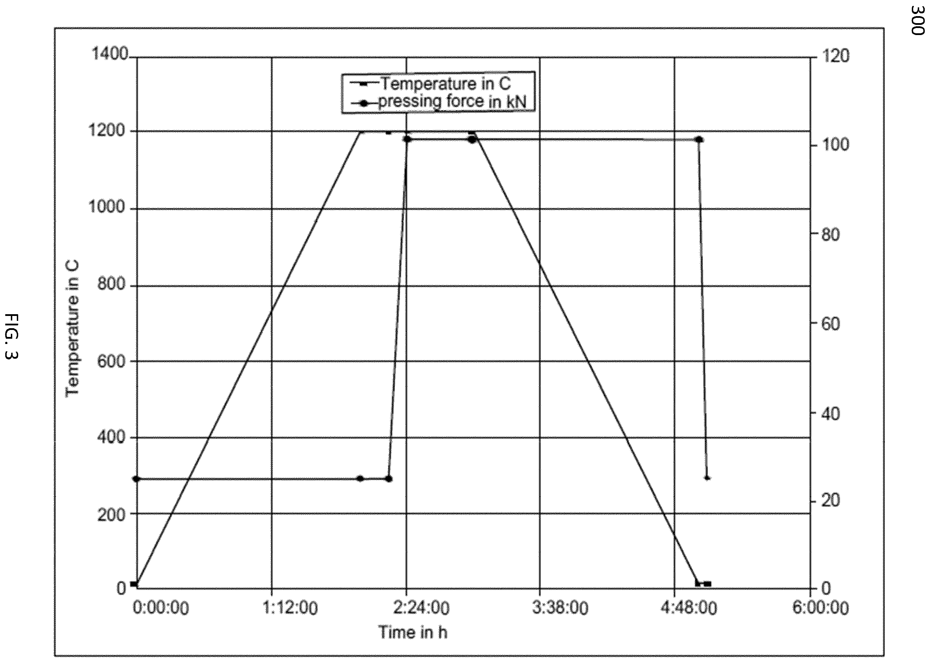

FIG. 3 illustrates a graph 300 for variation of temperature with respect to time during the process of sintering, in accordance with various embodiments of the present disclosure. The graph 300 has a vertical axis and a horizontal axis. The vertical axis represents temperature in degree Celsius, the pressure in kilo Newton and the horizontal axis represents time in an hour. In addition, the graph 300 has a first line and a second line. The first line corresponds to a temperature which has starting point nearest to zero and the second line corresponds to pressure which has a starting point between 200 kN and 400 kN. The temperature during sintering increases up to 1200 degree Celsius with respect to time. In addition, the temperature remains constant at 1200 degree Celsius for a certain period of time. Further, the temperature is reduced continuously during the process of sintering. The pressure remains constant for a certain period of time during the process of sintering. The pressure is increased up to a range of about 1100 kN to 1200 kN. The pressure is kept constant in the range of about 1100 kN to 1200 kN for a limited period of time. Further, the pressure is reduced to a range of about 200 kN to 400 kN.

The present disclosure provides numerous advantages over the prior art. The present disclosure provides an improved method for manufacturing of the optical fiber preform with a reduction in material loss. In addition, the method used for the manufacturing of the optical fiber preform is cost effective and requires less overall process time. Further, the method provides ease of operation during manufacturing of the optical fiber preform.

The foregoing descriptions of predefined embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstances may suggest or render expedient, but such are intended to cover the application or implementation without departing from the spirit or scope of the claims of the present technology.

The invention is further defined by the following numbered clauses:
1. A method for manufacturing of an optical fiber preform (108) comprising:
   compacting silica particles (102) to form compact a compacted object of a predefined shape; and
   sintering the compacted object along with the cylindrical rod (116) to form the optical fiber preform (108), wherein sintering of the compacted object is performed in a controlled atmosphere.
2. The method of clause 1, wherein the optical fiber preform (108) is cone free.
3. The method of clause 1 or 2, wherein compacting silica particles (102) further comprising applying a predefined pressure on the silica particles (102).
4. The method of any preceding clause, wherein the optical fiber preform is defined by a top surface, a bottom surface and one or more surfaces, wherein the top surface and the bottom surface are one of a flat surface and a curvature surface.
5. The method of any preceding clause, wherein the controlled atmosphere comprises at least one of a chlorine gas, helium gas, argon gas, and a nitrogen gas.
6. The method of any preceding clause, wherein the predefined shape corresponds to the shape of the pressing die (114).
7. The method of any preceding clause, wherein the silica particles (102) are compacted in a mold assembly (200).
8. The method of any preceding clause, wherein the optical fiber preform (108) has a diameter in a range of about 50 millimeters to 300 millimeters.
9. The method of any preceding clause, wherein the optical fiber preform (108) has a length in a range of about 50 millimeters to 2000 millimeters
10. The method of any preceding clause, wherein the optical fiber preform (108) has a density in a range of about 0.3 gram per cubic centimeter to 2.2 gram per cubic centimeter.
11. A method for manufacturing of an optical fiber preform (108) comprising:
   compacting silica particles (102) using a pressing die (114) and punching machine (112), wherein the silica particles (120) are loaded into a cavity of the pressing die (114) surrounding a cylindrical rod (116), wherein the silica particles (102) are compacted to form compact object with a predefined shape; and
   sintering the compacted object with the cylindrical rod (116) to form the optical fiber preform (108), wherein the sintering of the compacted object is performed in a controlled atmosphere,
   wherein the method facilitates in the manufacturing of the optical fiber preform (108) that is cone free.
12. The method of clause 11, wherein the compaction of the silica particles (102) corresponds to pressing of the silica particles (102).
13. The method of any of clauses 11 to 12, wherein the optical fiber preform that is cone free corresponds to the optical fiber preform (108) having either a flat surface at the top and bottom side or with small curvature surface at the top and bottom side.
14. The method of any of clauses 11 to 13, wherein the controlled atmosphere comprises one or more gases, wherein the one or more gases comprises chlorine, helium, argon, and dinitrogen (N₂), wherein the one or more gases are used independently, wherein the one or more gases are used in combination with each other, wherein the sintering of the compacted silica particles are performed under the controlled atmosphere to make the optical fiber preform (108) free from bubbles.
15. The method of any of clauses 11 to14, wherein the predefined shape of the optical fiber preform (108) is achieved based on the structure or construction of the pressing die (114) and the punching machine (112), wherein the structure or construction of the pressing die (114) and punching machine (112) define geometry to the optical fiber preform (108).
16. The method of any of clauses 11 to 15, wherein the silica particles (102) are compacted in a mold assembly (200), wherein the mold assembly (200) comprises the pressing die (114) and punching machine (112), wherein the material of the mold assembly (200) comprises one of steel, haste alloy, Carbon, Silicon Carbide, Aluminium, Foil, Teflon, HDPE, and Rubber.
17. The method of any of clauses 11 to 16, wherein the optical fiber preform (108) is one of a hollow cylindrical shape perform and solid cylindrical shape preform.
18. The method of any of clauses 11 to 17, wherein the optical fiber preform (108) has a diameter in a range of about 50 millimeters to 300 millimeters, wherein the optical fiber preform (108) has a length in a range of about 50 millimeters to 2000 millimeters, wherein the optical fiber preform (108) has a density in a range of about 0.3 gram per cubic centimeter to 2.2 gram per cubic centimeter.
19. The method of any of clauses 11 to 18, wherein the cylindrical rod (116) is one of a metal rod or a core rod, wherein the core rod is a germania doped silica glass used for the manufacturing of the optical fiber preform (108).

## Claims

1. A method for manufacturing of an optical fiber preform (108) comprising:
compacting silica particles (102) to form compact a compacted object of a predefined shape; and
sintering the compacted object along with the cylindrical rod (116) to form the optical fiber preform (108), wherein sintering of the compacted object is performed in a controlled atmosphere.

2. The method as claimed in claim 1, wherein the optical fiber preform (108) is cone free.

3. The method as claimed in any preceding claim, wherein compacting silica particles (102) further comprising applying a predefined pressure on the silica particles (102).

4. The method as claimed in any preceding claim, wherein the optical fiber preform is defined by a top surface, a bottom surface and one or more surfaces, wherein the top surface and the bottom surface are one of a flat surface and a curvature surface.

5. The method as claimed in any preceding claim, wherein the controlled atmosphere comprises at least one of a chlorine gas, helium gas, argon gas, and a nitrogen gas.

6. The method as claimed in any preceding claim, wherein the predefined shape corresponds to the shape of the pressing die (114).

7. The method as claimed in any preceding claim, wherein the optical fiber preform (108) has a density in a range of about 0.3 gram per cubic centimeter to 2.2 gram per cubic centimeter.

8. A method for manufacturing of an optical fiber preform (108) comprising:
compacting silica particles (102) using a pressing die (114) and punching machine (112), wherein the silica particles (120) are loaded into a cavity of the pressing die (114) surrounding a cylindrical rod (116), wherein the silica particles (102) are compacted to form compact object with a predefined shape; and
sintering the compacted object with the cylindrical rod (116) to form the optical fiber preform (108), wherein the sintering of the compacted object is performed in a controlled atmosphere,
wherein the method facilitates in the manufacturing of the optical fiber preform (108) that is cone free.

9. The method as claimed in claim 8, wherein the compaction of the silica particles (102) corresponds to pressing of the silica particles (102).

10. The method as claimed in any one of claims 8 or 9, wherein the optical fiber preform that is cone free corresponds to the optical fiber preform (108) having either a flat surface at the top and bottom side or with small curvature surface at the top and bottom side.

11. The method as claimed in any one of claims 8 to 10, wherein the controlled atmosphere comprises one or more gases, wherein the one or more gases comprises chlorine, helium, argon, and dinitrogen (N₂), wherein the one or more gases are used independently, wherein the one or more gases are used in combination with each other, wherein the sintering of the compacted silica particles are performed under the controlled atmosphere to make the optical fiber preform (108) free from bubbles.

12. The method as claimed in any one of claims 8 to 11, wherein the predefined shape of the optical fiber preform (108) is achieved based on the structure or construction of the pressing die (114) and the punching machine (112), wherein the structure or construction of the pressing die (114) and punching machine (112) define geometry to the optical fiber preform (108).

13. The method as claimed in any one of claims 8 to 12, wherein the silica particles (102) are compacted in a mold assembly (200), wherein the mold assembly (200) comprises the pressing die (114) and punching machine (112), wherein the material of the mold assembly (200) comprises one of steel, haste alloy, Carbon, Silicon Carbide, Aluminium, Foil, Teflon, HDPE, and Rubber.

14. The method as claimed in any one of claims 8 to 13, wherein the optical fiber preform (108) has a diameter in a range of about 50 millimeters to 300 millimeters, wherein the optical fiber preform (108) has a length in a range of about 50 millimeters to 2000 millimeters, wherein the optical fiber preform (108) has a density in a range of about 0.3 gram per cubic centimeter to 2.2 gram per cubic centimeter.

15. The method as claimed in any one of claims 8 to 14, wherein the cylindrical rod (116) is one of a metal rod or a core rod, wherein the core rod is a germania doped silica glass used for the manufacturing of the optical fiber preform (108).
